# FASCICULE DE BREVET EUROPEEN

(11) **EP 1 018 103 B1**
(45) Date de publication et mention de la délivrance du brevet: **22.02.2006**
(21) Numéro de dépôt: 98914912.5
(22) Date de dépôt: 13.03.1998
(51) Int. Cl.: G09F 15/00, G09F 27/00, G09B 29/10

(54) **BORNE PUBLIQUE D'INFORMATION**
ÖFFENTLICHER INFORMATIONSTERMINAL
PUBLIC INFORMATION TERMINAL

(30) Priorité: 13.03.1997 FR 9702977
(43) Date de publication de la demande: 12.07.2000
(73) Titulaire: Ribeiro-Socorro, Francisco, 92800 Puteaux (FR)
(72) Inventeur: Ribeiro-Socorro, Francisco, 92800 Puteaux (FR)
(74) Mandataire: Burtin, Jean-François
(86) Numéro de dépôt international: PCT/FR1998/000512
(87) Numéro de publication internationale: WO 1998/040869

(56) Documents cités:
- WO-A-93/09401
- WO-A-96/25702
- DE-U- 29 614 277
- US-A- 4 472 025
- US-A- 4 893 247

## Description

La présente invention concerne une borne publique d'information, notamment pour milieu urbain, permettant de délivrer, de manière simple et intuitive, des informations concernant le monde environnant.

Des bornes publiques d'information sont connues. Elles comportent généralement un moyen d'affichage de type écran pour délivrer l'information demandée. Elles requièrent, de façon générale, une interface de commande de la machine, telle qu'un clavier, un écran tactile ou équivalent. Dans certains cas, l'interface de commande est un casque pourvu d'une pluralité de capteurs et permettant de calculer l'orientation de la tête de l'utilisateur. Tous ces dispositifs sont soit techniquement extrêmement complexes, soit de peu d'efficacité, et, dans tous les cas, ils sont extrêmement rigides.

L'interface de commande reste cependant peu engageante pour un utilisateur éventuel, puisque d'une manipulation sensiblement fastidieuse. De ce fait, l'utilisateur éventuel continue à s'adresser régulièrement à un service d'accueil.

En outre, de telles bornes d'information ne délivrent qu'une information très limitée, par exemple un plan ou une carte, dont la lecture et la compréhension restent difficiles.

Le document WO-A-93/09401 propose un lecteur informatique personnel et portable incluant un compas adapté pour mesurer l'angle entre l'orientation de l'appareil et le nord magnétique. Un écran permet de visualiser une carte ou équivalent en fonction de l'orientation du lecteur.

Un tel lecteur présente de nombreux inconvénients, notamment en ce qui concerne son prix et son utilisation. Une caution préalable élevée doit être demandée à l'utilisateur occasionnel, et une grande précaution est également requise à ce dernier pour le transport et la manipulation.

En outre, puisqu'il est destiné à une utilisation publique, un tel lecteur pose des problèmes d'hygiène du fait de ses utilisateurs successifs ; il pose également des problèmes de résistance dans le temps, puisqu'il est utilisé par des personnes non initiées.

Par ailleurs, on connaît de WO-A-96/25702, un appareil portable de traitement de données qui affiche des graphismes modifiés en fonction de l'orientation spatiale de l'appareil. Un capteur commandé par gravité mesure en permanence l'orientation spatiale de l'appareil par rapport à l'horizontale de manière à commander le déplacement évolutif d'objets sur l'écran. Cet appareil reprend donc, sous forme électronique et coûteuse, un jeu ancien comportant des billes circulant dans un plan et devant être disposées simultanément dans des emplacements précis du plan.

On connait également le document DE-U-296 14 277 qui décrit un centre d'informations constitué par un boîtier qui comprend au moins un écran et un clavier. Le boîtier peut être orienté verticalement ou horizontalement. Le boîtier renferme une unité de calcul commandant l'écran et le clavier. Le but de ce dispositif est de faciliter la lecture des informations que l'écran affiche. Le boîtier est donc rendu rotatif autour d'un axe vertical et/ou horizontal, de manière à éviter les réflexions sur l'écran. Par ailleurs, le fait que l'écran soit rotatif permet à un handicapé assis dans un fauteuil roulant qui ne peut se lever, ou à de petites personnes, par exemple des enfants, de lire facilement les informations affichées sur l'écran. La rotation de l'écran est commandée par l'ordinateur et non par l'utilisateur.

Il existe donc un besoin d'une borne publique d'information qui soit simple d'utilisation pour tout utilisateur et efficace sans qu'il soit nécessaire d'adjoindre sur les lieux des dispositifs d'orientation additionnels, de type flèches, qui sont toujours malvenus et inesthétiques dans certains cadres tels que des musées.

Il est également nécessaire qu'une telle borne d'information n'ait pas besoin d'être portée par l'utilisateur, ni qu'elle soit totalement individuelle. Elle doit, en outre, être ludique et de toute sécurité, tant pour le matériel que pour l'utilisateur.

L'invention atteint ces buts au moyen d'une borne publique d'information comprenant, en combinaison :
un micro-ordinateur dont le moyen d'interface sonore ou graphique est monté à rotation sur un moyen de support,
un moyen de visée permettant d'orienter angulairement le moyen d'interface, et
un moyen de programme.

Selon l'invention, cette borne publique comprend, en outre, un moyen de détection et de mesure de la position angulaire du moyen d'interface et connecté au micro-ordinateur, le moyen de programme permettant d'exploiter la position angulaire du moyen d'interface pour délivrer une information correspondant à la position angulaire précitée.

On a ainsi une borne d'information que l'utilisateur peut orienter à volonté et indépendante de la position de la tête de l'utilisateur. Ce dernier n'a, en outre, nullement besoin d'un mode d'emploi. Il lui suffit d'imprimer une rotation à la borne et de la diriger vers une direction souhaitée pour obtenir sur un écran ou sur un haut-parleur toute l'information souhaitée sur la direction donnée.

Une telle borne d'information trouve donc son application dans tous les lieux publics, tels que les musées, les expositions, les points d'observation géographique, etc...

De préférence, la borne d'information comprend, en outre, un moyen de rappel du moyen d'interface ramenant ce dernier vers une position initiale d'attente lors de la non-utilisation de la borne, et, si possible, un moyen de frein interdisant toute rotation brusque et rapide du moyen d'interface.

De façon préférentielle, la borne publique d'information comprend, en outre, un moyen de recalage angulaire permettant de redéfinir périodiquement la position angulaire initiale du dispositif d'interface.

De préférence également, la borne publique d'information selon l'invention est encore perfectionnée en montant le moyen d'interface à pivotement sur le moyen de support, le moyen de détection et de mesure mesurant, en outre, l'angle azimutal.

L'invention sera mieux comprise, et d'autres buts, avantages et caractéristiques de celle-ci apparaîtront plus clairement à la lecture de la description qui suit des mode préférés de réalisation donnés à titre non limitatif et à laquelle deux planches de dessins sont annexées sur lesquelles :
La Figure 1 illustre schématiquement le principe de la borne d'information selon l'invention vue de dessus ;
La Figure 2 représente en perspective une borne d'information conformément à l'invention ; et
La Figure 3 est un tableau synoptique et schématique du fonctionnement d'une telle borne d'information.

En référence maintenant aux dessins, la borne publique d'information est symboliquement représentée sous la référence 10 sous une forme sensiblement d'un secteur dont l'arc courbe 12 constitue le moyen d'interface, c'est à dire soit un écran, soit un haut-parleur. Ci-après, il sera fait référence à un dispositif d'affichage sous forme générique pour désigner un écran ou un haut-parleur constituant ce moyen d'interface. La pointe 14 constituée par les deux segments rectilignes constitue un dispositif de visée symbolisé par la flèche 16. L'ensemble est monté à rotation autour d'un axe central 18 illustré par un référentiel orthogonal.

Une rotation d'un angle a de l'élément rotatif de la borne d'information 10 peut être facilement détectée par tout moyen connu, par exemple une roue à crémaillère, un dispositif potentiométrique ou équivalent.

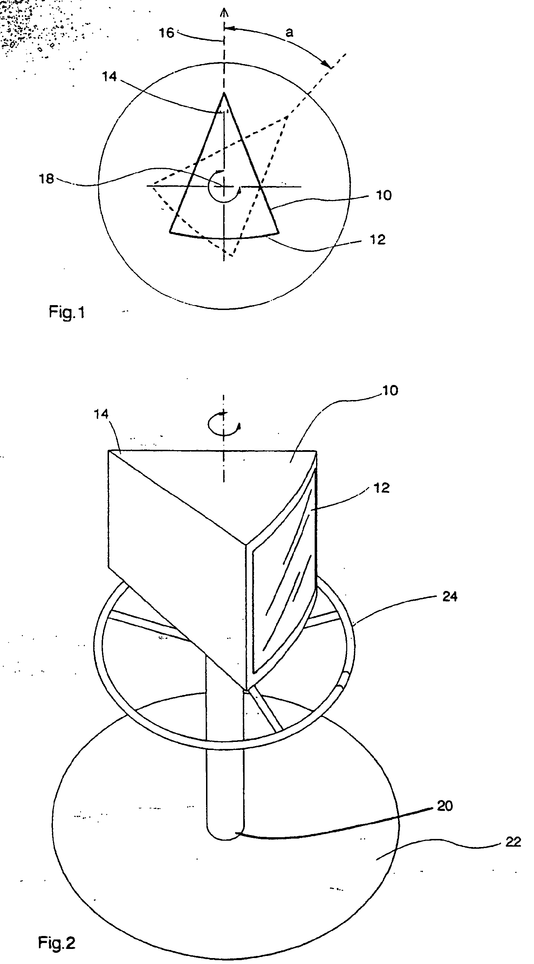

Bien évidemment, quoique la Figure 1 illustre une vue de dessus d'une borne d'information mettant en relief la position angulaire du dispositif d'affichage dans un plan horizontal, il est clair qu'une rotation azimutale peut, de la même façon, être relevée et transmise au micro-ordinateur.

Un mode de réalisation a été représenté en perspective sur la Figure 2. La borne publique d'information inclut un micro-ordinateur dissimulé à l'intérieur du moyen d'affichage 10. Ce moyen d'affichage 10 comporte un écran (et/ou un haut-parleur) 12. Le moyen d'affichage 10 est monté à rotation ou à pivotement sur un moyen de support, par exemple de type mât 20, ou sur un piètement conventionnel, monté sur un pied 22. Une poignée 24, par exemple circulaire ou partiellement circulaire, permet de manoeuvrer le moyen d'affichage en rotation. La pointe 14 du moyen d'affichage peut constituer un moyen de visée permettant d'orienter le moyen d'affichage 10.

Bien que cela ne soit pas représenté sur les Figures, un moyen de rappel du moyen d'interface permet de ramener doucement ce dernier vers une position initiale de référence lorsque sa position n'a pas été modifiée pendant un certain temps. Ce moyen de rappel est, de préférence, constitué par un moteur électrique commandé par le micro-ordinateur lui-même, mais il peut alternativement être constitué par un moyen de ressort bandé par une rotation précédente, moyen de ressort comprenant un ressort spiralé ou un vérin à air comprimé. Un moyen de rappel magnétique peut également être envisagé.

Bien évidemment, un moyen de butées est prévu pour limiter l'angle de rotation possible du moyen d'interface, notamment lorsque le moyen de rappel est un moyen mécanique. Toutefois un tel moyen de butées n'est pas nécessaire si le moyen d'interface peut effectuer une ou plusieurs rotations complètes. Dans un tel cas, il se pose un problème d'alimentation électrique de la borne, qui peut être résolu de façon classique.

Egalement non représenté, un moyen de frein est prévu pour éviter toute rotation brusque, rapide ou intempestive du moyen d'interface de la borne d'information. Ce moyen de frein est généralement couplé au moyen de rappel précité.

Lorsque le moyen de rappel a fonctionné pour remettre la borne dans sa position de référence initiale, ou bien lorsque la borne est mise en service, un moyen de recalage permet de redéfinir la position angulaire initiale de la borne et de mettre cette information en mémoire dans le micro-ordinateur.

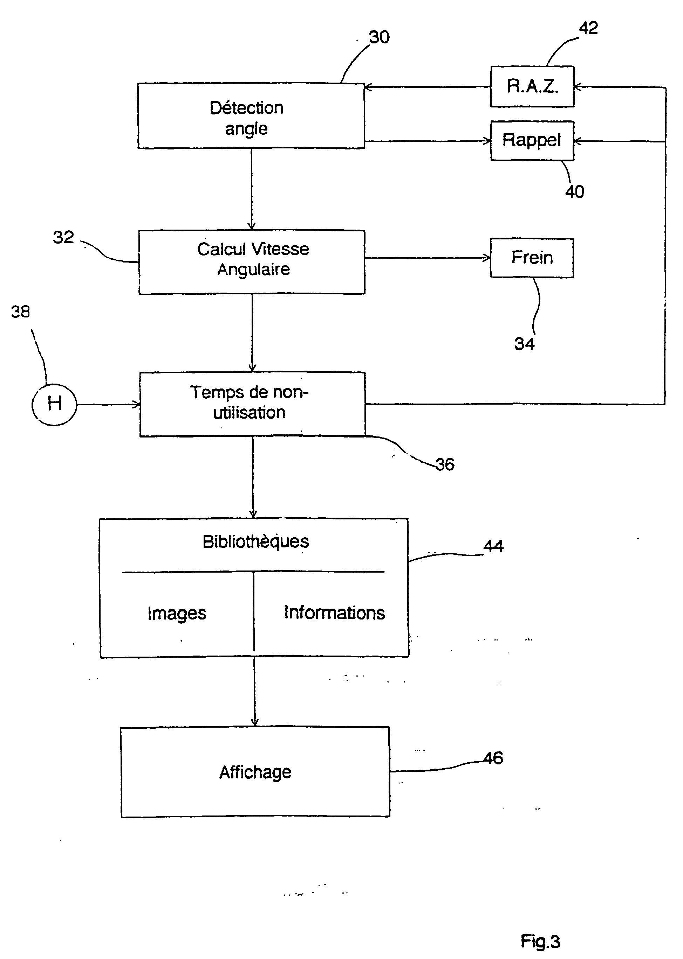

Sur la Figure 3, on a représenté un tableau synoptique et schématique illustrant le fonctionnement d'une borne d'information selon la présente invention.

La détection de l'angle a de la borne par rapport à sa position d'origine est effectuée en 30. La vitesse de rotation est déterminée en 32, par exemple par dérivation de la position angulaire de la borne dans le temps. La vitesse de rotation détermine la mise en oeuvre du frein 34 pour éviter toute détérioration de l'ensemble.

Ensuite, le temps de non-utilisation est calculé par le module 36 au moyen de l'horloge 38 du micro-ordinateur. Ce module 36 commande le moyen de rappel 40 de la borne de manière à la remettre en sa position initiale de référence, ainsi que le moyen de recalage de la position angulaire 42, autrement dit "remise à zéro". La mise en veille de la borne peut avantageusement provoquer la mise en route d'un programme d'attente diffusé sur l'écran du moyen d'affichage. Dans ce cas, le moyen de recalage angulaire exécute son oeuvre de façon transparente pour l'utilisateur.

Lorsque tout est conforme, c'est à dire que la position angulaire du moyen d'interface de la borne est stabilisée, c'est à dire qu'elle n'est pas modifiée pendant un temps supérieur à un seuil déterminé, par exemple de l'ordre de une ou deux seconde(s), le micro-ordinateur va chercher dans une bibliothèque interne 44, d'une part l'image correspondant à la position angulaire choisie par l'utilisateur et les informations susceptibles d'être demandées par l'utilisateur. L'image est alors affichée en 46 sur le moyen d'affichage précité, avec une liste de questions possibles. Un "menu" d'attente peut avantageusement être alors affiché de façon transparente ou non. Bien évidemment, si le moyen d'affichage est un haut-parleur, il ne s'agit pas d'une image, mais d'un son.

On aura compris qu'une borne publique d'information de ce type offre de nombreux avantages à l'utilisateur, puisqu'elle est très facile d'utilisation et ludique, et qu'elle est tout à fait appropriée à une utilisation sur des lieux publics tels que des musées, foires et expositions.

En outre, la bibliothèque d'images et/ou de sons ne comprendra, de façon avantageuse, que des images nues, c'est à dire dépourvues de visiteurs parasites, et/ou de sons purs, c'est à dire dépourvus des bruits ambiants, de manière à restituer le cadre originel de l'espace concerné. La borne pourra alors agir en tant que caméra virtuelle s'il y a écran.

Bien que l'on ait représenté et décrit ce que l'on considère actuellement être les modes de réalisation préférés de présente invention, il est évident que l'Homme de l'Art pourra y apporter différents changements et modifications sans sortir du cadre de la présente invention tel que défini ci-après.

Par exemple, une telle borne publique d'information peut être disposée sur un moyen de support de type télescopique.

Autre exemple, la borne d'affichage selon l'invention peut être pourvue d'un moyen moteur permettant une assistance à la rotation du moyen d'affichage, ce moyen permettant de coopérer avec le moyen de frein précité. Un tel moyen moteur peut être, favorablement, un moyen du type à commande vocale pour faciliter l'utilisation de la borne conforme à l'invention.

Un moyen de caméra peut également être associé à la borne de manière à délivrer une image réelle de la zone de visée, avant d'obtenir l'image et les informations mémorisées dans la mémoire du micro-ordinateur.

On pourra également prévoir que la borne publique d'information affiche sur son écran ou diffuse par un haut-parleur une information pré-programmée, lorsque aucun utilisateur ne s'en approche. Un détecteur de proximité peut favorablement être prévu dans ce cas.

Bien évidemment, la borne publique d'information selon l'invention pourra également être montée de façon amovible sur roulettes ou équivalent. De telles roulettes pourront être amovibles ou rétractables si nécessaire.

Elle pourra également comporter un écran tactile et/ou un moyen de commande vocale.

## Revendications

1. Borne publique d'information (10) comprenant, en combinaison :
un micro-ordinateur dont le moyen d'interface sonore ou graphique (12) est monté à rotation sur un moyen de support (20, 22),
un moyen de visée (14) permettant d'orienter angulairement le dit moyen d'interface (12), et
un moyen de programme,
**caractérisée en ce qu'**elle comprend, en outre,
un moyen (30) de détection et de mesure de la position angulaire (a) du dit moyen d'interface (12) et connecté au dit micro-ordinateur, le dit moyen de programme permettant d'exploiter la position angulaire (a) du dit moyen d'interface (12) pour délivrer une information correspondant à la dite position angulaire (a).

2. Borne publique selon la revendication 1, **caractérisée en ce qu'**elle comprend, en outre, un moyen de rappel (40) du dit moyen d'interface (12) ramenant ce dernier vers une position initiale d'attente lors de la non-utilisation de la dite borne (10).

3. Borne publique selon la revendication 1 ou 2, **caractérisée en ce qu'**elle comprend, en outre, un moyen de frein (34) interdisant toute rotation brusque et rapide du dit moyen d'interface (12).

4. Borne publique selon l'une quelconque des revendications précédentes, **caractérisée en ce qu'**elle comprend, en outre, un moyen de recalage angulaire permettant de redéfinir périodiquement la position angulaire initiale (a) du dit dispositif d'interface (12).

5. Borne publique selon l'une quelconqupe des revendications précédentes, **caractérisée en ce que** le dit moyen d'interface (12) est monté à pivotement sur le dit moyen de support (20, 22), le dit moyen de détection et de mesure (30) mesurant, en outre, l'angle azimutal.

6. Borne publique selon l'une quelconque des revendications précédentes, **caractérisée en ce qu'**elle comprend, en outre, un moyen de butées limitant l'angle de rotation possible..

7. Borne publique selon l'une quelconque des revendications précédentes, **caractérisée en ce qu'**elle comporte, en outre, un moyen moteur d'assistance à la rotation.

8. Borne publique selon l'une quelconque des revendications précédentes, **caractérisée en ce qu'**elle comporte, en outre, un détecteur de proximité.

## Claims

1. Information terminal for the public (10) comprising in a combination .
- a micro computer the means of sonor or graphic interface (12) of which is mounted to rotate on a supporting means (20, 22).
- A sighting means (14) allowing to angularly direct the said interface means (12) and
- A means for programming,
wherein it further includes a means (30) for detecting and measuring the angular position (a) of the said interface means (12) and which is connected to the said micro- computer, the said means for programming allowing the exploitation of the angular position of the said means of interface (12) to provide an information corresponding to the said angular position (a).

2. Terminal for the public according to claim1, wherein it further includes a means of compensation (40) of the said means of interface (12) which leads back the latter to an initial waiting position when the said terminal (10) is not utilized.

3. Terminal for the public according to claim 1 or 2, wherein it further includes a means for braking (34) impeding any sudden and fast rotation of the said means of interface (12).

4. Terminal for the public to according to anyone of the preceding claims, wherein it further includes a means for angular stalling allowing to periodically redefine the initial angular position (a) of the said interface device (12).

5. Terminal for the public according to anyone of the preceding claims, wherein the said interface means is pivotally mounted on the said supporting means (20, 22), the said means for detecting and measuring (30), further measuring the azimutal angle.

6. Terminal for the public according to anyone of the preceding claims, wherein it further includes a means for stopping limiting any possible rotative angle.

7. Terminal for the public according to anyone of the preceding claims, wherein it further includes a motor means for assisting the rotation.

8. Terminal for the public according to anyone of the preceding claims, wherein it further comprises a detecting means for proximity.

## Patentansprüche

1. Öffentliche Informationsanzeigestation (10) umfassend in Kombination:
einen Mikrorechner, dessen akustisches oder graphisches Interface (12) auf einem Träger (20, 22) drehbar gelagert ist;
eine Visiereinrichtung (14) zum Winkelausrichten des Interface (12), und
eine Programmiereinrichtung
**dadurch gekennzeichnet, dass** die Station unter anderem eine Einrichtung (30) zum Erfassen und Messen der Winkelposition (a) des Interface (12) aufweist, angeschlossen an den Mikrorechner, um die winkelposition (a) des Interface (12) zu ermitteln, und um eine Information abzugeben, die der Winkelposition (a) entspricht.

2. öffentliche Informationlanzelgestation gemäß Anspruch 1, **dadurch gekennzeichnet, dass** sie unter anderem eine Rückholeinrichtung (40) des Interface (12) aufweist, um dieses bei Nichtgebrauch der Station in eine anfängliche Warteposition zurückzuführen.

3. Station nach Anspruch 1 oder 2, **dadurch gekennzeichnet, dass** diese unter anderem eine Bremseinrichtung (34) aufweist, die jegliche abrupte und schnelle Verdrehung des interface (12) unterbindet

4. Station nach einem der vorausgegangenen Ansprüche, **dadurch gekennzeichnet, dass** diese eine Einrichtung zum neuen Winkeleinstellen aufweist, um periodisch die Ausgangs-Winkelposition (a) Interface (12) erneut zu definieren.

5. Station nach einem der vorausgegangenen Ansprüche, **dadurch gekennzeichnet, dass** das Interface (12) auf dem Träger (20, 22) schwenkbar gelagert Ist, und dass die Einrichtung (30) zum Erfassen und Messen unter anderem den azimutalen Winkel erfasst,

6. Station nach einem der vorausgegangenen Ansprüche, **dadurch gekennzeichnet, dass** diese unter anderem einen Anschlag aufweist, der den möglichen Drehwinkel begrenzt.

7. Station nach einem der vorausgegangenen Ansprüche, **dadurch gekennzeichnet, dass** diese unter anderem einen Hllfsmotor für die Verdrehung aufweist.

8. Station nach einem der vorausgegangenen Ansprüche, **dadurch gekennzeichnet, dass** diese unter anderem einen Näherungsdetektor aufweist.
